# EUROPÄISCHE PATENTANMELDUNG

(11) **EP 4 559 560 A1**
(43) Veröffentlichungstag der Anmeldung: **28.05.2025**
(21) Anmeldenummer: 23211184.9
(22) Anmeldetag: 21.11.2023
(51) Int. Cl.: B01D 53/14, F26B 25/00

(54) **REINIGUNG VON ABLUFT VON VOLATILE ORGANIC COMPOUND (VOC)**

(71) Anmelder: SWISS KRONO Tec AG, 6004 Luzern (CH)
(72) Erfinder: KALWA, Norbert, 32805 Horn-Bad Meinberg (DE); SEIDACK, Georg, 16909 Wittstock / Dosse (DE)
(74) Vertreter: Maikowski & Ninnemann Patentanwälte Partnerschaft mbB

(57) **Zusammenfassung**

Die Erfindung betrifft eine Waschflüssigkeit zum Reinigen von Abluft, die bei der Trocknung von Holzrohstoffen anfällt, von volatile organic compounds, wobei die Waschflüssigkeit Wasser und mindestens einen Emulgator aufweist. Weiterhin umfasst die Erfindung ein Verfahren zum Reinigen der Abluft, die bei der Trocknung von Holzrohstoffen anfällt, wobei die Abluft mit einer erfindungsgemäßen Waschflüssigkeit versetzt wird. Die Waschflüssigkeit scheidet zumindest teilweise mindestens ein volatile organic compound der Abluft ab.

## Beschreibung

Bei der Herstellung von Holzwerkstoffen, wie beispielswiese Spanplatten, OSB, HDF- oder MDF-Platten, besteht ein wesentlicher Produktionsschritt im Trocknen von Holzrohstoffen auf das für die Produktion benötige Niveau. Dieses Niveau liegt bei allen Holzwerkstoffen unterhalb von 10 Gew.% Wasser. Die Holztrocknung, die üblicherweise durch vorerwärmte Luft in Trommel- oder Rohrtrocknern durchgeführt wird, erzeugt neben der Emission erheblicher Wassermengen auch die Emission von Holzinhaltsstoffen. Dabei handelt es sich um Terpene (vorwiegend Monoterpene), Carbonsäuren und anderen Kohlenwasserstoffverbindungen. Zusätzlich führt der Trocknungsprozess auch zu Abbauprozessen im Holz. Daraus resultiert auch eine Emission von Aldehyden, Formaldehyden und ähnlichen Stoffen. Diese Emissionen können je nach eingesetzter Holzart eine erhebliche Konzentration von >> 500 mg/Nm³ in der Abluft erreichen. Insbesondere einige der freigesetzten Terpene und Aldehyde führen wegen ihrer niedrigen Geruchsschwellen und ihres unangenehmen Geruchs zu Belästigungen bei Anwohnern. Zudem hat der Gesetzgeber für die unter dem Begriff VOC (volatile organic compounds) zusammengefassten gasförmigen, organischen Bestandteile Grenzwerte festgelegt. Diese liegen je nach Holzwerkstoff und je nach Trockner unter genormten Bedingungen bei einer Konzentration von max. 400 mg/Nm³ in der Abluft.

Dieser Sachverhalt macht es erfordert durch technische Maßnahmen eine Reduktion der VOC's in der Kaminabluft zu erreichen. Allerdings ist zu konstatieren, dass die VOC's insbesondere die längerkettigen Aldehyde und Terpene, chemisch wenig reaktiv sind. Damit ist eine Reduktion durch Fänger oder eine chemische Umwandlung kaum möglich. Ein weiteres Problem ist, dass Terpene und längerkettige Aldehyde schlecht wasserlöslich sind. Das bedeutet, das auch das Auswaschen der Verbindungen in einem herkömmlichen Wäscher einen niedrigen Wirkungsgrad besitzt.

Bekannt sind weiterhin Verfahren, in denen die Abluft durch Kodensationsprozesse gereinigt wird. DE 38 22 943 A1 betrifft beispielsweise ein Verfahren und eine Vorrichtung zum Reinigen von Trocknerluft. Der Abluftstrom wird durch Kühlung gesättigt, mit Kondensationskeimen versetzt und die sich bildenden Tropfen werden abgeschieden.

EP 1 278 588 B1 betrifft ein Verfahren und eine Anlage zur Abtrennung von Holzinhaltsstoffen aus bei der Holzverbrennung entstehenden Gasen, die als Abluft abgeführt werden. In dem Verfahren wird die Abluft in zwei Schritten gereinigt. Zunächst wird die Abluft durch Kontakt mit einer Flüssigkeit gewaschen, hierbei werden Harze, organische Säuren und Staubpartikel aus der Abluft in der Flüssigkeit angereichert. Im zweiten Schritt wird die derart gereinigte Abluft gekühlt unter gleichzeitiger Kondensation der sich noch in der Abluft befindlichen Inhaltsstoffe wie Terpene, Methanol, Ethanol und Carbonsäuren. Der Schritt des Waschens allein ist dabei nicht ausreichend, da wie bereits beschrieben vor allem Terpene und längerkettige Aldehyde schlecht wasserlöslich sind. Um diese aus der Abluft zu entfernen, ist daher der Kondensationsschritt notwendig.

Andere technische Lösungen wie eine Nachverbrennung der Abluft mit Hilfe von Erdgas, Verwendung von Teilen der Abluft als Luft für ein Kesselhaus usw. führen zwar zu einem Abbau der VOC's sind aber teuer oder schränken die Variabilität des zu Grunde liegenden Prozesses ein. Auch ist eine Nachverbrennung der Abluft mit Erdgas unter ökologischen Aspekten eher kritisch zu sehen, selbst wenn die erwärmte Luft in einem technischen Prozess weiter genutzt wird.

Ausgehend vom Stand der Technik ist es die Aufgabe der Erfindung eine effiziente Reinigung von Abluft, insbesondere der Abluft, die bei der Trocknung von Holzrohstoffen anfällt, zur ermöglichen. Die Abluft soll dabei insbesondere von volatile organic compounds gereinigt werden. Die Nachteile aus dem Stand der Technik sollen behoben werden und die Reinigung soll in bestehende technische Anlagen und Prozesse ohne zusätzliche technische Ausrüstung, kostensparend integriert werden können. Zugrundeliegende technische Prozesse sollen zudem technisch nicht aufwendiger werden.

Diese Aufgabe löst die vorliegende Erfindung durch eine Waschflüssigkeit gemäß dem Anspruch 1 und ein Verfahren gemäß dem Anspruch 6.

### Beschreibung

Die vorliegende Erfindung stellt eine Waschflüssigkeit zum mindestens teilweisen Abscheiden von mindestens einem volatile organic compound aus Abluft zur Verfügung. In einer besonders bevorzugten Ausführungsform stellt die Erfindung eine Waschflüssigkeit zum mindestens teilweisen Abscheiden von mindestens einem volatile organic compound aus Abluft zur Verfügung, wobei die Abluft bei der Trocknung von Holzrohstoffen anfällt. Insbesondere bei der Trocknung von Holzrohstoffen bei der Herstellung von OSB, Span-, HDF- oder MDF-Platten.

In einer Ausführungsform ist die Waschflüssigkeit geeignet mehrere volatile organic compounds aus Abluft mindestens teilweise abzuscheiden.

In einer Ausführungsform ist die Waschflüssigkeit geeignet volatile organic compounds aus der Abluft derart abzuscheiden, dass die Abluft nach dem Versetzten mit dem Waschmittel volatile organic compounds unterhalb eines vorgegebenen Grenzwertes, bevorzugt unterhalb eines gesetzlich vorgegebenen Grenzwertes, aufweist. In einer Ausführungsform weist die Abluft aus der Trocknung von Holzrohstoffen bei der Herstellung von OSB nach dem Versetzen mit dem Waschmittel volatile organic compounds unterhalb eines Grenzwertes von 400 mg/Nm³ auf. In einer Ausführungsform weist die Abluft aus der Trocknung von Holzrohstoffen bei der Herstellung von Spanplatten nach dem Versetzen mit dem Waschmittel volatile organic compounds unterhalb eines Grenzwertes von 200 mg/Nm³ auf. In einer Ausführungsform weist die Abluft aus der Trocknung von Holzrohstoffen bei der Herstellung von HDF- oder MDF-Platten Platten nach dem Versetzen mit dem Waschmittel volatile organic compounds unterhalb eines Grenzwertes von 120 mg/Nm³ auf. Sämtliche genannte Grenzwerte gelten für alle bei der Trocknung von Holzrohstoffen bei der Herstellung von Spanplatten, OSB, HDF- oder MDF-Platten verwendeten Trocknertypen. Mit der Einheit mg/Nm³ wird das Normvolumen (Normkubikmeter, Nm³) herangezogen und die Menge der VOC's in Milligramm angegeben. Da diese Einheit druck- und temperaturabhängig ist, bezieht man sich auf das Volumen bei Normalbedingungen: Temperatur 0°C und Druck 1013 mbar. Mit den aufgeführten Grenzwerten werden die Anforderungen der Europäischen Union entsprechend der Direktive 2010/75/EU umgesetzt [Best Available Techniques (BAT) Reference Document for the Production of Wood-based Panels, 2016, EUR 277732 EN; ISBN 978-92-79-54949-6]. Der Grenzwert bezieht sich auf die Gesamtmenge an VOC's in der Abluft, wobei die Messung der VOC's in der Abluft gemäß EN 12619 erfolgt.

Unter Abscheiden ist erfindungsgemäß zu verstehen, dass mindestens ein Anteil der Konzentration mindestens eines volatile organic compound aus der Abluft in einem Teil der Waschflüssigkeit gebunden wird und mit dieser eine Emulsion bildet. Die Konzentration des mindestens einen volatile organic compound wird dadurch in der Abluft reduziert. In einer bevorzugten Ausführungsform werden mehrere verschiedene VOC's aus der Abluft in einem Teil der Waschflüssigkeit gebunden und bilden mit dieser eine Emulsion.

Unter volatile organic compounds (VOC) werden flüchtige organische Verbindungen zusammengefasst. Dazu gehören Kohlenwasserstoffe, Alkohole, Aldehyde und organische Säuren. Gemäß der Definition der Wirtschaftskommission für Europa (UNECE) sind VOC's organische Verbindungen, die in Industrieprozessen emittiert werden und ein Ozonbildungspotential (POCP) besitzen. In einer Ausführungsform der vorliegenden Erfindung sind die volatile organic compounds, die aus der Abluft abgeschieden werden, ausgesucht aus der Gruppe aufweisend Terpene, Carbonsäuren, Aldehyde, Ketone, aromatische Kohlenwasserstoffe und andere Kohlenwasserstoffe.

Die Waschflüssigkeit weist erfindungsgemäß Wasser und mindestens einen Emulgator auf.

In einer Ausführungsform der vorliegenden Erfindung weist die Waschflüssigkeit zwischen 0,05 Gew.% und 2 Gew.%, bevorzugt zwischen 0,1 Gew% und 0,5 Gew.% des mindestens einen Emulgator auf. Erfindungsgemäß ist der mindestens eine Emulgator daher wasserlöslich.

Besonders bevorzugt ist der mindestens eine Emulgator geeignet mindestens ein volatile organic compound aus der Abluft abzuscheiden, wobei sich eine Emulsion aus Wasser, Emulgator und dem mindestens einen abgeschiedenen volatile organic compound bildet. Bevorzugt ist der Emulgator dazu geeignet mehr als ein volatile organic compound aus der Abluft abzuscheiden. Besonders bevorzugt ist der Emulgator dazu geeignet sämtliche volatile organic compounds aus der Abluft abzuscheiden, deren Konzentration in der Abluft verringert werden muss, bevor die Abluft in die Umwelt abgegeben werden darf. Vorteilhafterweise können so Abgase von volatile organic compounds gereinigt werden, um Umweltstandards, insbesondere die Direktive 2010/75/EU der Europäischen Union, zu erfüllen.

In einer Ausführungsform ist der mindestens eine Emulgator ausgewählt aus der Gruppe aufweisend Fettalkohole, quaternäre Ammoniumsalze, Fettsäureamide, Lecithine und ähnliche. In einer besonders bevorzugten Ausführungsform ist der mindestens eine Emulgator ein Lecithin. Lecithine sind Phosphatidylcholine und als solche beispielsweise Bestandteil der Zellmembran tierische und pflanzlicher Lebewesen. Sie sind Begleitstoffe in Fetten und fetten Ölen und besonders reich in Eidottern und pflanzlichen Samenzellen vorhanden.

In einer Ausführungsform der Erfindung weist die Waschflüssigkeit genau einen Emulgator auf. In einer weiteren Ausführungsform weist die Waschflüssigkeit eine Mischung aus Emulgatoren auf. In einer Ausführungsform der vorliegenden Erfindung weist die Waschflüssigkeit bevorzugt eine Mischung aus 2, 3 oder 4 Emulgatoren auf.

In einer Ausführungsform weist die Waschflüssigkeit zwischen 0,05 Gew% und 2,0 Gew.%, bevorzugt zwischen 0,1 Gew% und 0,5 Gew.% des mindestens einen Emulgators oder einer Mischung aus Emulgatoren auf.

In einer Ausführungsform der vorliegenden Erfindung ist der mindestens eine Emulgator oder die Mischung aus Emulgatoren geeignet, mindestens einen Stoff aus der Stoffgruppe der Kohlenwasserstoffverbindungen aus der Abluft abzuscheiden. Es bildet sich eine Emulsion aus Wasser, Emulgator und dem mindestens einen Stoff aus der Stoffgruppe der Kohlenwasserstoffverbindungen.

Vorteilhafterweise ist der mindestens eine Emulgator oder sind die Mischung aus Emulgatoren keine umweltgefährdende Substanz, bzw. wird der Emulgator bzw. die Mischung aus Emulgatoren in einer Konzentration verwendet, in der keine Umweltgefährdung vorliegt.

Weiterhin stellt die Erfindung ein Verfahren zum Reinigen der Abluft, die bei der Trocknung von Holzrohstoffen anfällt, zur Verfügung. Erfindungsgemäß wird die Abluft mit einer erfindungsgemäßen Waschflüssigkeit versetzt, wobei die Waschflüssigkeit mindestens teilweise mindestens ein volatile organic compound aus der Abluft abscheidet.

Alle Merkmale, die für die Waschflüssigkeit beschrieben wurden, treffen in gleicher Weise auf das erfindungsgemäße Verfahren zu und umgekehrt.

In einer Ausführungsform der vorliegenden Erfindung wird die Waschflüssigkeit in die Abluft mit mindestens einem oder mehreren Düsenringen, einer oder mehreren Düsenleisten, einer oder mehreren Einzeldüsen oder anderer dem Fachmann bekannter geeigneter Vorrichtungen, oder einer Kombination der genannten Vorrichtungen eingesprüht. Bevorzugt wird die Abluft dabei in einem Kamin geführt.

In einer weiteren Ausführungsform der vorliegenden Erfindung wird Abluft in einem Kamin geführt und an mindestens zwei Stellen des Kamins wird Waschflüssigkeit jeweils mit mindestens einem oder mehreren Düsenringen, einer oder mehreren Düsenleisten, einer oder mehreren Einzeldüsen oder anderer dem Fachmann bekannter geeigneter Vorrichtungen, oder einer Kombination der genannten Vorrichtungen eingesprüht. Dabei können Waschflüssigkeiten mit der gleichen Zusammensetzung oder auch verschiedenen verwendet werden. Dabei können sich die Waschflüssigkeiten in der Konzentration des Emulgators der Waschflüssigkeiten unterscheiden oder es können Waschflüssigkeiten mit verschiedenen Emulgatoren verwendet werden.

Besonders vorteilhaft ist, dass Düsenringe zum Einsprühen von Wasser in Kaminen mit Abluftwäschern wie sie in der Verarbeitung von Holzwerkstoffen, wie beispielswiese bei der Herstellung von OSB, MDF-Platten oder HDF-Platten genutzt werden, im Allgemeinen vorhanden sind. Vorteilhafterweise können diese in der vorhandenen Form genutzt werden. Zusätzliche technische Bauteile sind daher nicht notwendig. Das erfindungsgemäße Verfahren kann daher in bereits bestehende Verfahrensabläufe eingebunden werden, wodurch die Kosten für die Durchführung des erfindungsgemäßen Verfahrens geringgehalten werden.

In einer besonders bevorzugten Ausführungsform der Erfindung entsteht die Abluft daher während des Trockenschrittes bei der Herstellung von OSB, Spanplatten, MDF-Platten oder HDF-Platten.

OSB sind im Deutschen auch unter dem Begriff Grobspanplatten bekannt. Die Bezeichnung OSB steht im Englischen für "oriented strand board" und beschreibt eine Platte aus ausgerichteten Spänen. OSB sind Mehrschichtplatten, die aus langen, schlanken Spänen ("strands") hergestellt werden.

MDF- und HDF-Platten sind mitteldichte Faserplatte (MDF) bzw. hochdichte Faserplatten (HDF). Diese bestehen aus feinst zerfasertem, hauptsächlich rindenfreiem Holz. Durch Verpressen wird ein in Längs- und Querrichtung gleichermaßen homogener Holzwerkstoff hergestellt.

Spanplatten werden hauptsächlich aus Holzresten und Durchforstungsholz hergestellt. Hierbei kommen unterschiedliche Holzpartikel zum Einsatz, die sich sowohl in der Holzart als auch in der Partikelgröße unterscheiden können.

Bei der Herstellung der Spanplatten, OSB, HDF- oder MDF-Platten werden die Holzpartikel, Späne bzw. die Holzfasern getrocknet. Die hierbei entstehende Abluft wird in einer bevorzugten Ausführungsform durch das erfinderische Verfahren zumindest teilweise von mindestens einem volatile organic compound gereinigt, bevor sie beispielsweise in die Umwelt abgeführt wird.

In einer Ausführungsform der vorliegenden Erfindung wird die Emulsion die sich aus Wasser, Emulgator und den abgeschiedenen volatile organic compounds bildet zusammen mit der eventuell vorhandenen restlichen Waschflüssigkeit gesammelt. Die eventuell vorhandene restliche Waschflüssigkeit und die Emulsion bilden das Abwasser.

Die Emulsion kann dann in einer Abwasserreinigungsvorrichtung ausgewaschen und anschließend abgetrennt und entsorgt werden. In einer alternativen Ausführungsform können aus der Emulsion verwertbare Substanzen abgetrennt und einer weiteren Nutzung zugeführt werden. In einer Ausführungsform kann Terpen für weitere technische Anwendungen gewonnen werden. In einer Ausführungsform des erfindungsgemäßen Verfahrens wird daher aus der Emulsion aus Waschflüssigkeit und mindestens einem volatile organic compound mindestens eine Substanz zurückgewonnen. In einer weiteren Ausführungsform werden mehrere Substanzen aus der Emulsion zurückgewonnen. In einer Ausführungsform sammelt sich die Emulsion an der Oberfläche des Abwassers und kann zum Beispiel durch Flotation abgetrennt werden. In einer weiteren Ausführungsform der Erfindung wird die Emulsion im Abwasser durch Abdekandieren getrennt.

In einer Ausführungsform des vorliegenden Verfahrens weist die Abluft nach dem Versetzen mit dem Waschmittel volatile organic compounds unterhalb gesetzlich vorgegebener Grenzwerte, insbesondere unterhalb der in der Direktive 2010/75/EU der Europäischen Union festgeschriebenen Grenzwerte, auf. In einer bevorzugten Ausführungsform des erfindungsgemäßen Verfahrens weist die Abluft aus der Trocknung von Holzrohstoffen bei der Herstellung von OSB nach dem Versetzen mit dem Waschmittel volatile organic compounds unterhalb eines Grenzwertes von 400 mg/Nm³ auf. In einer weiteren Ausführungsform des erfindungsgemäßen Verfahrens weist die Abluft aus der Trocknung von Holzrohstoffen bei der Herstellung von Spanplatten nach dem Versetzen mit dem Waschmittel volatile organic compounds unterhalb eines Grenzwertes von 200 mg/Nm³ auf. In einer Ausführungsform des erfindungsgemäßen Verfahrens weist die Abluft aus der Trocknung von Holzrohstoffen bei der Herstellung von HDF- oder MDF-Platten nach dem Versetzen mit dem Waschmittel volatile organic compounds unterhalb eines Grenzwertes von 120 mg/Nm³ auf. Durch das erfindungsgemäße Verfahren können daher vorteilhaftweise VOC's in der Abluft, die bei der Trocknung von Holzrohstoffen bei der Herstellung von OSB, Spanplatten, MDF-Platten oder HDF-Platten entstehen, reduziert werden.

Im Folgenden wird die Erfindung anhand von 2 Figuren und einem Ausführungsbeispiel näher erläutert.
- Figur 1: stellt schematisch den Ablauf der Herstellung einer MDF-/HDF-Platte mit dem erfindungsgemäßen Verfahren dar;
- Figur 2: stellt schematisch den Ablauf der Herstellung einer OSB mit dem erfindungsgemäßen Verfahren dar.

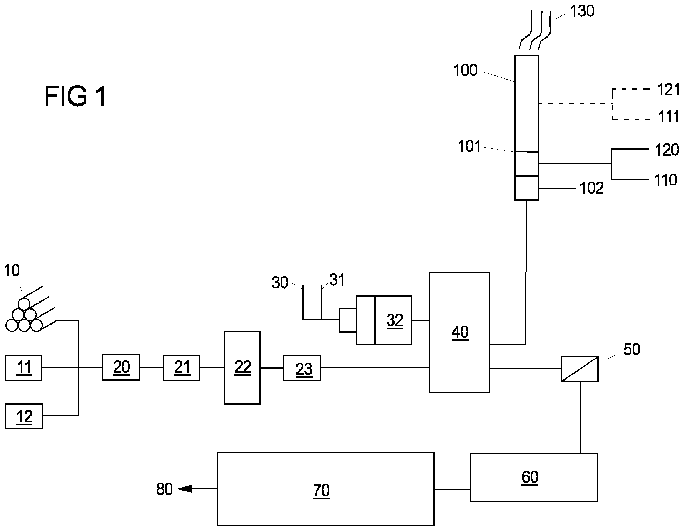

**Figur 1** stellt schematisch den Ablauf der Herstellung einer MDF-/HDF-Platte 80 mit dem erfindungsgemäßen Verfahren dar.

Als Rohstoff für die Holzfaserherstellung werden Frischholz 10, Hackschnitzel 11 und/oder Recyclingholz 12 verwendet. Das Frischholz 10 wird im Allgemeinen entrindet und beispielsweise in einem Scheibenhacker zu Hackschnitzeln zerkleinert. Anschließend gelangen die Hackschnitzel zur hydrochemischen Behandlung in einen Vorkocher 20, anschließend in einen Kocher 21 und danach in einen Zerfaserer ("Refiner") 22. Die Fasern werden in einem weiteren Prozessschritt 23 mit einem Leim versehen und in einen Trockner 40 überführt.

Der Faserstoff wird in einem Trockner 40 getrocknet, wobei überschüssiges Wasser entzogen wird. Der Trockner 40 wird durch einen Brenner 32 mit warmer Luft versorgt. Der Brenner 32 wird über eine Brennstoffzufuhr 30 und eine Luftzufuhr 31 betrieben. Die bei der Trocknung entstehende Abluft wird über einen Kamin 100 abgeleitet.

Meist werden die Fasern nach dem Trocknen in einem Fasersichter 50 nachgereinigt. Die Fasern könne hierfür beispielsweise in einen Luftstrom gegeben werden und entweder über Wirbelbildung, scharfe Umlenkung, Prallsichtung, Steigluftsichtung oder eine Kombination mehrere Effekte von Fremdstoffen (beispielsweise Leimklumpen, Metall, Gummi) befreit werden. Anschließend werden die Fasern zur Streustation 60 weitergeleitet. In der Streustation 60 werden die Fasern in einen Formrohling gebracht, der dann in einer Heißpresse 70 zur fertigen MDF-/HDF-Platte 80 verpresst wird.

Die in den Kamin 100 abgeführt Abluft wird durch einen Düsenring mit der erfindungsgemäßen Waschflüssigkeit besprüht. Die Waschflüssigkeit wird durch das Vermischen von Wasser 120 und mindestens einem Emulgator 110 gebildet. Durch die Waschflüssigkeit werden volatile organic compounds aus der Abluft ausgeschieden und bilden zusammen mit einem Teil der Waschflüssigkeit eine Emulsion. Die Emulsion und die restliche Waschflüssigkeit werden den in einem Abwasserbehälter 102 aufgefangen. Die Abluft kann anschließen weiterhin durch einen Nasselektrofilter 101 geleitet werden. Im Nasselektrofilter 101 können weitere Partikel aus der Abluft entfernt werden. Optional kann die Abluft durch einen weiteren Düsenring erneut mit einer erfindungsgemäßen Waschflüssigkeit in Kontakt gebracht werden, um eventuell noch vorhandene volatile organic compounds aus der Abluft abzuscheiden. Die Waschflüssigkeit wird wiederum durch das Vermischen von Wasser 121 und mindestens einem Emulgator 111 gebildet. Die hierbei entstehende Emulsion und die restliche Waschflüssigkeit werden ebenfalls in dem Abwasserbehälter 102 gesammelt. Die gereinigte Abluft 130 wird durch den Kamin 100 in die Umwelt abgegeben.

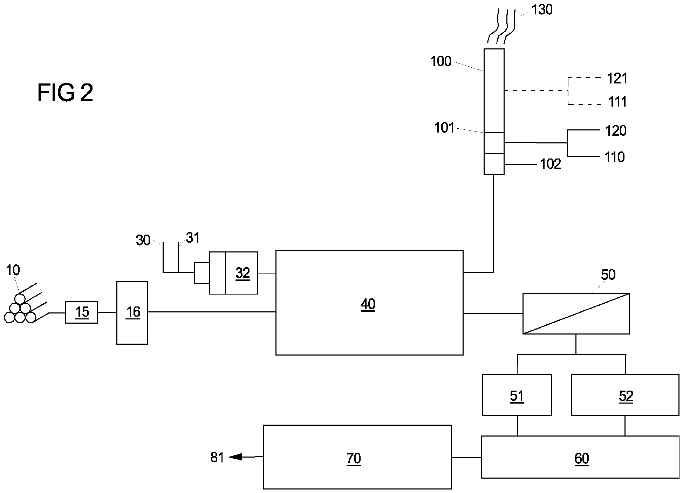

**Figur 2** stellt schematisch den Ablauf der Herstellung einer OSB 81 mit dem erfindungsgemäßen Verfahren dar.

Als Rohmaterial wird frisches Holz 10 und alternativ für die Mittelschicht Recyclingholz verwendet. Das Rohmaterial wird, wenn notwendig entrindet 15 und anschließend in Längsrichtung durch rotierende Messer zu Spänen ("strands") verarbeitet 16. Die natürliche Feuchtigkeit der Späne wird in einem Trockner 40 reduziert. Der Trockner 40 wird durch einen Brenner 40 mit warmer Luft versorgt. Der Brenner 40 wird über eine Brennstoffzufuhr 30 und eine Luftzufuhr 31 betrieben. Die bei der Trocknung entstehende Abluft wird über einen Kamin 100 abgeleitet.

Die Späne werden anschließend an einer Sichtstation 50 in Späne für die Deckschicht und Späne für die Mittelschicht getrennt. Sowohl die Späne für die Deckschicht als auch die Späne für die Mittelschicht werden in weiteren Prozessschritten 51, 52 mit Leim versehen und anschließend in einer Streustation 60 in Schichten angeordnet. Beispielsweise kann dies in einem Wurfverfahren derart durchgeführt werden, dass die Späne längs und quer orientiert in drei Schichten in Form von Deckschicht-Mittelschicht-Deckschicht anordnet. Anschließend werden die Schichten in einer Heißpresse 70 zur fertigen OSB 81 verpresst.

Die in den Kamin 100 abgeführt Abluft wird durch einen Düsenring mit der erfindungsgemäßen Waschflüssigkeit besprüht. Die Waschflüssigkeit wird durch das Vermischen von Wasser 120 und mindestens einem Emulgator 110 gebildet. Durch die Waschflüssigkeit werden volatile organic compounds aus der Abluft ausgeschieden und bilden zusammen mit dem Waschflüssigkeit eine Emulsion. Die Emulsion und die restliche Waschflüssigkeit werden in einem Abwasserbehälter 102 aufgefangen. Die Abluft kann anschließen weiterhin durch einen Nasselektrofilter 101 geleitet werden. Im Nasselektrofilter 101 können weitere Partikel aus der Abluft entfernt werden. Optional kann die Abluft durch einen weiteren Düsenring erneut mit einer erfindungsgemäßen Waschflüssigkeit in Kontakt gebracht werden, um eventuell noch vorhandene volatile organic compounds aus der Abluft abzuscheiden. Die Waschflüssigkeit wird wiederum durch das Vermischen von Wasser 121 und mindestens einem Emulgator 111 gebildet. Die hierbei entstehende Emulsion und die restliche Waschflüssigkeit werden ebenfalls in dem Abwasserbehälter 102 gesammelt. Die gereinigte Abluft 130 wird durch den Kamin 100 in die Umwelt abgegeben.

### Ausführungsbeispiel 1

In einem röhrenförmigen Kamin (Höhe ca. 1 m, Durchmesser: 0,5 m) wurde von unten eine definierte Menge eines Terpenaerosols (α-Pinen) eingedüst. Im unteren Bereich des Reaktors befanden sich seitlich Düsen, die einen kontinuierlichen Luftstrom in den Kamin einbrachte (Luftgeschwindigkeit: 10 m/min). Von oben wurde in den Kamin über einen Düsenring ein Gemisch aus Wasser und einem Lecithin auf Sojabasis als Emulgator eingesprüht. In dem Wasser befanden sich 0,3 Gew.% des Lecithins. Das Gewichtsverhältnis zwischen Wasser und Terpenaerosol lag bei ca. 100 zu 1. Das sich am Boden des Reaktors sammelnde Gemisch aus Wasser und Emulsion wurde gesammelt und dann die Emulsion durch Abdekantieren abgetrennt. Dann wurde das Verhältnis zwischen eingedüstem Terpenaerosol und aufgefangener Emulsion bestimmt. Es wurden 71% des Aerosols in der Emulsion wiedergefunden.

### Bezugszeichenliste

- 10: Frischholz
- 11: Hackschnitzel
- 12: Recyclingholz
- 15: Entrinden
- 16: rotierende Messer
- 20: Vorkocher
- 21: Kocher
- 22: Zerfaserer
- 23, 50, 51: Prozessschritt Beleimen
- 30: Brennstoffzufuhr
- 31: Luftzufuhr
- 32: Brenner
- 40: Trockner
- 50: Fasersichter
- 60: Streustation
- 70: Heißpresse
- 80: MDF-/HDF-Platte
- 81: OSB
- 100: Kamin
- 101: Nasselektrofilter
- 102: Abwasserbehälter
- 110, 111: Emulgator
- 120, 121: Wasser
- 130: gereinigte Abluft

## Patentansprüche

1. Waschflüssigkeit zum mindestens teilweisen Abscheiden mindestens eines volatile organic compounds aus Abluft,
**dadurch gekennzeichnet, dass**
die Waschflüssigkeit Wasser und mindestens einen Emulgator (110, 111) aufweist.

2. Waschflüssigkeit gemäß Anspruch 1, **dadurch gekennzeichnet, dass** die Waschflüssigkeit eine Mischung aus Emulgatoren (110, 111) aufweist.

3. Waschflüssigkeit gemäß einem der vorangegangenen Ansprüche, **dadurch gekennzeichnet, dass** die Waschflüssigkeit zwischen 0,05 Gew% und 2,0 Gew.% des mindestens einen Emulgators (110, 111) oder einer Mischung aus Emulgatoren (110, 111) aufweist.

4. Waschflüssigkeit gemäß einem der vorangegangenen Ansprüche, **dadurch gekennzeichnet, dass** der mindestens eine Emulgator (110, 111) oder eine Mischung aus Emulgatoren (110, 111) geeignet ist mindestens einen Stoff aus der Stoffgruppe der Kohlenwasserstoffverbindungen aus der Abluft abzuscheiden.

5. Waschflüssigkeit gemäß einem der vorangegangenen Ansprüche, **dadurch gekennzeichnet, dass** der mindestens eine Emulgator (110, 111) ausgewählt ist aus der Gruppe aufweisend Fettalkohole, quaternäre Ammoniumsalze, Fettsäureamide, Lecithin und ähnliche.

6. Waschflüssigkeit gemäß einem der vorangegangenen Ansprüche, **dadurch gekennzeichnet, dass** die volatile organic compounds, die aus der Abluft abgeschieden werden, ausgesucht sind aus der Gruppe aufweisend Terpene, Carbonsäuren, Aldehyde, Ketone, aromatische Kohlenwasserstoffe und anderen Kohlenwasserstoffen.

7. Verfahren zum Reinigen von Abluft, insbesondere von Abluft, die bei der Trocknung von Holzrohstoffen anfällt,
**dadurch gekennzeichnet,**
**dass** die Abluft mit einer Waschflüssigkeit gemäß einem der Ansprüche 1 bis 6 versetzt wird, wobei die Waschflüssigkeit mindestens teilweise ein mindestens ein volatile organic compound aus der Abluft abscheidet.

8. Verfahren gemäß einem der vorangegangenen Ansprüche, **dadurch gekennzeichnet, dass** die Emulsion die sich aus Waschflüssigkeit und dem mindestens einem abgeschiedenen volatile organic compound bildet gesammelt wird.

9. Verfahren gemäß einem der vorangegangenen Ansprüche, **dadurch gekennzeichnet, dass** die Waschflüssigkeit in die Abluft mit mindestens einem oder mehreren Düsenringen, einem oder mehreren Düsenleisten, einer oder mehrere Einzeldüsen oder einer Kombination dieser eingesprüht wird.

10. Verfahren gemäß einem der vorangegangenen Ansprüche, **dadurch gekennzeichnet, dass** die Abluft in einem Kamin (100) geführt wird und an mindestens zwei Stellen des Kamins Waschflüssigkeit jeweils mit einem oder mehreren Düsenringen, einem oder mehreren Düsenleisten, einer oder mehrere Einzeldüsen oder einer Kombination dieser eingesprüht wird.

11. Verfahren gemäß einem der vorangegangenen Ansprüche, **dadurch gekennzeichnet, dass** die Abluft nach dem Versetzten mit dem Waschmittel volatile organic compounds unterhalb vorgegebener Grenzwerte aufweist.

12. Verfahren gemäß einem der vorangegangenen Ansprüche, **dadurch gekennzeichnet, dass** das aus der Emulsion aus Waschflüssigkeit und volatile organic compounds mindestens eine Substanz zurückgewonnen wird.

13. Verfahren gemäß einem der vorangegangenen Ansprüche **dadurch gekennzeichnet, dass** die Abluft beim Trockenschritt bei der Herstellung von Spanplatten, OSB (81), MDF-Platten oder HDF-Platten (80) entsteht.

14. Verfahren gemäß Anspruch 13, **dadurch gekennzeichnet, dass** die Abluft aus der Trocknung von Holzrohstoffen bei der Herstellung von OSB (81) nach dem Versetzen mit dem Waschmittel volatile organic compounds unterhalb eines Grenzwertes von 400 mg/Nm³ aufweist oder dass die Abluft aus der Trocknung von Holzrohstoffen bei der Herstellung von Spanplatten nach dem Versetzen mit dem Waschmittel volatile organic compounds unterhalb eines Grenzwertes von 200 mg/Nm³ aufweist oder dass die Abluft aus der Trocknung von Holzrohstoffen bei der Herstellung von HDF- oder MDF-Platten (80) nach dem Versetzen mit dem Waschmittel volatile organic compounds unterhalb eines Grenzwertes von 120 mg/Nm³ aufweist.
